# EUROPÄISCHE PATENTANMELDUNG

(11) **EP 3 480 169 A1**
(43) Veröffentlichungstag der Anmeldung: **08.05.2019**
(21) Anmeldenummer: 18204307.5
(22) Anmeldetag: 05.11.2018
(51) Int. Cl.: C02F 3/12, C02F 1/463

(54) **KLÄRVORRICHTUNG MIT FÄLLMODUL**

(30) Priorität: 06.11.2017 DE 202017106679 U
(71) Anmelder: ATB WATER GmbH, 32457 Porta Westfalica (DE)
(72) Erfinder: Baumann, Markus, 32547 Bad Oeynhausen (DE); Zelmer, Torsten, 32545 Bad Oeynhausen (DE)
(74) Vertreter: Ter Meer Steinmeister & Partner

(57) **Zusammenfassung**

Klärvorrichtung (10, 100, 200, 300, 400), umfassend zumindest eine Klärkammer (24, 124, 222, 224), enthaltend ein Abwasservolumen, das in einer freien Strömung die Klärkammer (24, 124, 222, 224) durchströmt oder durch diese zirkuliert, Einrichtungen zur Förderung oder Behandlung des Abwassers, und ein Fällmodul (40, 140), das in der Klärkammer (24, 124, 222, 224) angeordnet ist, dadurch gekennzeichnet, dass das Fällmodul (40, 140) in einer Position angeordnet ist, in der es von der Strömung durchströmt wird.

## Beschreibung

Die vorliegende Erfindung betrifft eine Klärvorrichtung gemäß dem Oberbegriff des Anspruchs 1.

Derartige Klärvorrichtungen umfassen zumindest eine Klärkammer, die ein zu reinigendes Abwasservolumen enthalten, und Einrichtungen zur Abwasserbehandlung oder Abwasserbeförderung, die innerhalb dieses Volumens angeordnet sind. Das Abwasser kann die Klärkammer in einer freien Strömung durchströmen oder durch diese zirkulieren. Die Einrichtungen können beispielsweise Pumpen, Heber, Zu- oder Abläufe, Belüfter oder dergleichen umfassen.

Die vorliegende Erfindung betrifft insbesondere Anlagen, die mit einem Fällmodul ausgestattet sind. Dieses Modul bewirkt durch die Abgabe von Metallionen (z.B. Eisen oder Aluminium) eine Reinigung des Abwassers. Es besteht üblicherweise aus mindestens zwei Platten, die mit einem definierten Abstand zueinander in der Klärkammer unterhalb der Wasseroberfläche angeordnet sind. Die Abgabe der Ionen wird entweder durch die natürliche Oxidation des Metalls im Wasser oder durch eine zusätzlich angewandte Elektrolyse durch eine angeschlossene Gleichstromquelle erzielt. Durch die Abgabe der Ionen in das Abwasser bilden sich chemische Verbindungen, die ein Ausfällen des Phosphats aus dem Abwasser bewirken. Dieses Verfahren ist in der Abwasserreinigung als solches bekannt. Weiterhin wird durch diesen Prozess eine zusätzliche Ausfällung bzw. Koagulation von weiteren in Schwebe befindlichen Abwasserinhaltsstoffen erzielt.

Dieses Prinzip wird beispielsweise in DE 20 2012 006 736 U1 und DE 196 18 074 A1 beschrieben.

Beim Stand der Technik werden beispielsweise Module eingesetzt, in denen das Fällmaterial erzeugt und dann in der Klärkammer noch nachfolgend mit zusätzlichem Energieaufwand, also etwa durch elektrisch betriebene Pumpen verteilt werden muss. Bei anderen bekannten Anwendungen wird geeignetes Fällmaterial (z.B. Eisensalze) in flüssiger Form gezielt in den Behälter dosiert. Bei diesen Verfahren muss das Fällmaterial auch noch aufwändig mit dem Behälterinhalt vermischt werden.

Es ist daher eine Aufgabe der vorliegenden Erfindung, eine Klärvorrichtung der eingangs genannten Art zu schaffen, bei welcher das Fällmaterial effektiv unter möglichst geringem Energieaufwand im Volumen der Klärkammer verteilt wird.

Diese Aufgabe wird erfindungsgemäß durch eine Klärvorrichtung mit den Merkmalen des Anspruchs 1 gelöst.

Erfindungsgemäß ist das Fällmodul in einer Position angeordnet, in der es von der freien Strömung innerhalb der Klärkammer durchströmt wird. Insbesondere kann es sich hierbei um eine Strömung handeln, der nicht innerhalb von Leitungen, Rohren, Hebern oder Gehäusen der Einrichtungen zur Abwasserbehandlung oder Abwasserbeförderung in einem definierten Strömungskanal geführt wird und somit von einem im Wesentlichen statischen, also nicht durchströmten Umgebungsbereich scharf getrennt ist, sondern um eine frei in die Kammer einströmende oder darin zirkulierende Strömung. Die Strömung kann allerdings auch allein durch Gravitation oder Sedimentation, also durch das Absinken schwererer Volumenanteile des Abwassers erzeugt werden. Entscheidend für das Wirkungsprinzip der Erfindung ist die Ausnutzung einer Strömungsbewegung, die nicht durch zusätzliche energieintensive Fördereinrichtungen zur Verteilung des aus dem Fällmodul austretenden, das Fällmaterial enthaltenden Fluidstroms erzeugt werden muss, sondern im Betrieb der Anlage ohnehin auftritt.

Gemäß einer bevorzugten Ausführungsform der Erfindung wird die Strömung durch die Einrichtungen zur Förderung oder Behandlung des Abwassers erzeugt.

Gemäß einer bevorzugten Ausführungsform der Erfindung umfasst das Fällmodul zwei im Wesentlichen parallele Platten, die im Abstand voneinander angeordnet sind und zwischen sich einen Strömungskanal begrenzen, der zumindest zu einer Einlassseite und einer gegenüberliegenden Auslassseite hin offen ist. Falls das Fällmodul als Elektrolysemodul ausgebildet ist, handelt es sich bei den Platten um Elektroden.

Vorzugsweise ist der Strömungskanal ferner zu gegenüberliegenden lateralen Seiten hin offen. Hiermit sollen die Seiten bezeichnet werden, die seitlich zu der vorstehend beschriebenen Einlassseite und der Auslassseite angeordnet sind, d.h. seitlich zu einer Strömungsrichtung von der Einlassseite zur Auslassseite. Auch an den lateralen Seiten kann somit Abwasser in das Fällmodul eintreten bzw. daraus austreten.

Weiter vorzugsweise stehen die Platten senkrecht in der Klärkammer. Die Strömung kann dann das Fällmodul vertikal passieren und an den Innenseiten der Platten vorbeistreichen.

Gemäß einer weiteren bevorzugten Ausführungsform der Erfindung stehen die Platten horizontal in der Klärkammer. Dies dient insbesondere zur Ausnutzung einer horizontalen Strömung, die zum Beispiel an einem Einlass in einer Wand der Klärkammer auftritt.

Vorzugsweise sind zwischen den Platten Führungsmittel zur Umlenkung und/oder Verwirbelung der Strömung innerhalb des Strömungskanals angeordnet. Hierdurch kann die Einwirkungszeit und damit die Effizienz des Fällmoduls erhöht werden. Bei den Führungsmitteln kann es sich beispielsweise um Umlenkbleche oder dergleichen handeln, die die Strömung innerhalb des Strömungskanals mehrfach umlenken und damit den im Strömungskanal zurückgelegten Weg des Fluids verlängern.

Gemäß einer weiteren bevorzugten Ausführungsform der Erfindung umfassen die Einrichtungen zumindest einen Belüfter, der im Bodenbereich der Klärkammer angeordnet ist, und dass das Fällmodul ist auf einer Höhe oberhalb des Belüfters angeordnet. Aus dem Belüfter aufsteigende Luftblasen sorgen für eine aufwärts gerichtete Strömung, die das darüber angeordnete Fällmodul passiert. In diesem Fall wird also eine Strömung ausgenutzt, die durch eine ohnehin vorhandene Einrichtung zur Abwasserbehandlung, nämlich durch das Belüftungsmodul erzeugt wird und somit nichts eigens zur Durchleitung des Fluids durch das Fällmodul erzeugt werden muss, etwa durch eine zusätzliche Pumpe.

Vorzugsweise ist in diesem Fall das Fällmodul unmittelbar über dem Belüfter angeordnet.

Gemäß einer weiteren bevorzugten Ausführungsform der Erfindung ist die Klärkammer eine Hauptklärkammer, die aus einer vorgeschalteten Vorklärkammer mit vorgereinigtem Abwasser gespeist wird. In der Hauptklärkammer kann dann eine Endreinigung des Abwassers stattfinden.

Vorzugsweise ist in der Vorklärkammer ein weiterer Belüfter angeordnet.

Gemäß einer weiteren bevorzugten Ausführungsform der Erfindung umfassen die Einrichtungen einen Zulauf in einer Wand der Klärkammer, und dass das Fällmodul ist im Zulauf oder vor oder hinter dem Zulauf angeordnet. Durch den Zulauf kann das Abwasser frei in die Klärkammer einströmen. Hierdurch wird die Strömung erzeugt, in der das Fällmodul angeordnet wird. Auch in diesem Fall wird somit eine Strömung genutzt, die von einer ohnehin für den Betrieb der Kläranlage benötigten Einrichtung erzeugt wird.

Gemäß einer weiteren bevorzugten Ausführungsform der Erfindung umfassen die Einrichtungen einen Ablauf in einer Wand der Klärkammer, und dass das Fällmodul im Ablauf oder vor oder hinter dem Ablauf angeordnet ist.

Gemäß einer weiteren bevorzugten Ausführungsform der Erfindung umfasst die Klärvorrichtung zumindest einen Klärbehälter, der durch zumindest eine Trennwand in Klärkammern unterteilt ist, wobei das Fällmodul in einer dieser Klärkammern angeordnet ist.

Vorzugsweise umfasst in diesem Fall die Trennwand zumindest eine Durchtrittsöffhung, und das Fällmodul ist vor oder hinter der Durchtrittsöffnung angeordnet. In diesem Fall wird die Strömung von einer der Klärkammern innerhalb des Klärbehälters eine nachgeschaltete Klärkammer durch die Durchtrittsöffhung ausgenutzt, um die freie Strömung zu erzeugen, die durch das Fällmodul hindurchtritt.

Weiter vorzugsweise umfassen diese Klärkammern eine vorgeschaltete und eine nachgeschaltete Klärkammer, von denen die nachgeschaltete Klärkammer aus der vorgeschalteten Klärkammer gespeist wird, und die Einrichtungen zur Förderung bzw. Behandlung des Abwassers umfassen eine Fördereinrichtung zur Rückführung von Abwasser aus der nachgeschalteten Klärkammer in die vorgeschaltete Klärkammer. Bei dieser Fördereinrichtung kann es sich beispielsweise um eine Pumpe oder um einen Druckluftheber handeln. Die Fördereinrichtung kann insbesondere das Abwasser über eine Trennwand zwischen den Klärkammern hindurch fördern.

Weiter vorzugsweise erzeugt die Fördereinrichtung in diesem Fall eine Strömung, in welcher das Fällmodul angeordnet ist.

Gemäß einer weiteren Ausführungsform der vorliegenden Erfindung umfasst die Klärvorrichtung mehrere Klärbehälter, die untereinander durch zumindest eine Fördereinrichtung zur Förderung von Abwasser aus einem Klärbehälter in einen nachgeschalteten Klärbehälter verbunden sind, wobei das Fällmodul in einem dieser Klärbehälter angeordnet ist.

Gemäß einer weiteren Ausführungsform der vorliegenden Erfindung umfasst die Klärvorrichtung zumindest einen Klärbehälter, der durch zumindest eine Unterteilungswand in mehrere Teilbereiche unterteilt ist, welche Unterteilungswand derart angeordnet ist, dass sie vom Abwasser seitlich umströmt werden kann, wobei das Fällmodul in einem der Teilbereiche angeordnet ist. Die Unterteilungswand bzw. die Unterteilungswände können somit dazu genutzt werden, die Strömungen innerhalb des Klärbehälters zu lenken.

Weiter vorzugsweise umfasst der Klärbehälter zumindest zwei Unterteilungswände, die derart angeordnet sind, dass das Abwasser zwischen ihnen durchströmen kann, wobei das Fällmodul zwischen diesen Unterteilungswänden angeordnet ist.

Im Folgenden werden bevorzugte Ausführungsbeispiele der vorliegenden Erfindung anhand der Zeichnung näher erläutert.
- Fig. 1: zeigt einen vertikalen Schnitt durch eine erste Ausführungsform einer Klärvorrichtung gemäß der vorliegenden Erfindung;
- Fig. 2: ist ein horizontaler Schnitt durch die Klärvorrichtung gemäß Fig. 1;
- Fig. 3: ist eine schematische Darstellung einer alternativen Ausführungsform einer Klärvorrichtung gemäß der vorliegenden Erfindung; und
- Fig. 4 bis 11: sind schematische Darstellungen weiterer Ausführungsformen der Klärvorrichtung gemäß der vorliegenden Erfindung.

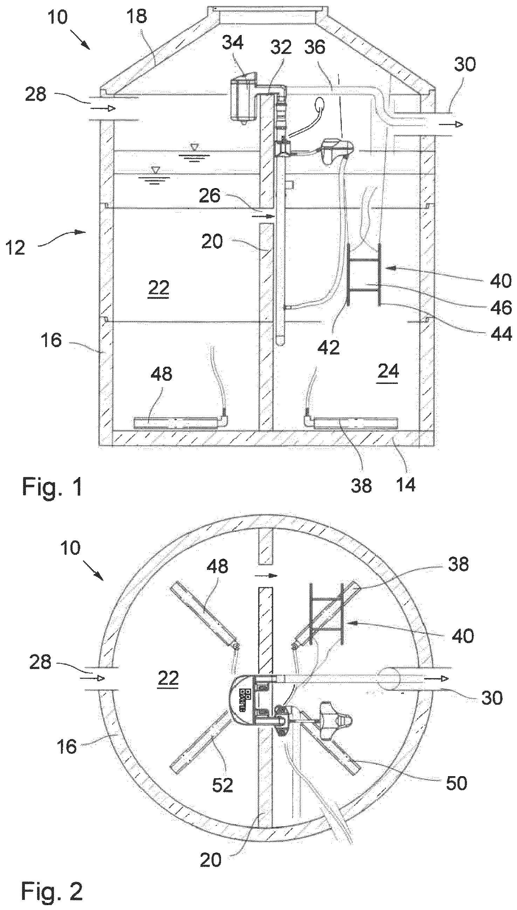

Die in Fig. 1 dargestellte Klärvorrichtung 10 umfasst einen etwa zylindrischen Behälter 12 mit einem Boden 14, einer zylindrischen Außenwand 16 und einem etwa kegelstupfförmigen Deckel 18. Der Innenraum des Behälters 12 ist durch eine etwa mittig angeordnete Trennwand 20 in zwei Klärkammern unterteilt, nämlich in eine Vorklärkammer 22 (in Fig. 1 und 2 links) und eine Hauptklärkammer 24. In der Hauptklärkammer 24 findet eine Klärung und Endreinigung von Abwasser statt, das vorgereinigt aus der Vorklärkammer 22 in die Hauptklärkammer 24 durch einen Zulauf 26 in der Trennwand 20 einströmt. Die Vorklärkammer 22 wird durch einen eigenen Zulauf 28 von außen mit ungereinigtem Abwasser beschickt. Gereinigtes Klarwasser kann über einen Ablauf 30 im oberen Bereich der der Außenwand 16 aus der Hauptklärkammer 24 nach außen abgeführt werden.

Verfahren und Einrichtungen, welche die Klärung innerhalb der Hauptklärkammer 24 betreffen, sich an sich bekannt und sollen daher hier nicht näher erörtert werden. Dies betrifft auch die Betriebsweise und die konstruktiven Einzelheiten eines Hebers 32, der an der Trennwand 20 aufgehängt ist und dazu dient, gereinigtes Abwasser aus einer Klarwasserzone der Hauptklärkammer 24 zyklisch nach oben über einen Zwischenbehälter 34 und eine Ablaufleitung 36 zum Ablauf 30 zu befördern.

Am Boden 14 der Hauptklärkammer 24 ist ein Belüfter 38 angeordnet, der zum Belüften des Abwasservolumens innerhalb der Hauptklärkammer 24 betrieben wird. Aus dem Belüfter 38 steigen Luftblasen auf und führen das umgebende Abwasser mit sich nach oben. Auf diese Weise entsteht eine nach oben gerichtete Strömung, die die Hauptklärkammer 24 frei durchströmen kann. Sie führt zu einer Zirkulationsbewegung des Abwassers innerhalb der Hauptklärkammer 24, das das Abwasser wiederum an der Seitenwänden 16 und an der Trennwand 20 wieder absinken muss.

Über dem Belüfter 38 ist ein Fällmodul 40 angeordnet, das frei in der Hauptklärkammer 24 aufgehängt ist. Das Fällmodul 40 umfasset zwei parallele Platten 42 und 44, die senkrecht stehen und parallel in einem Abstand voneinander angeordnet sind. Zwischen den Platten 42, 44 befindet sich somit ein Zwischenraum, der einen Strömungskanal 46 darstellt, der vom Abwasser durchströmt werden kann.

Das Fällmodul 40 bewirkt durch die Abgabe von Metallionen eine Reinigung des Abwassers. Im vorliegenden Fall handelt es sich bei dem Fällmodul 40 um ein Elektrolysemodul, das heißt, die Platten 42, 44 stellen Elektroden dar, an welche eine Gleichspannung angelegt wird. Durch die Abgabe der Ionen in das Abwasser bilden sich chemische Verbindungen, die ein Ausfällen des Phosphats aus dem Abwasser bewirken. Weiterhin wird durch diesen Prozess eine zusätzliche Ausfällung bzw. Koagulation von weiteren in Schwebe befindlichen Abwasserinhaltsstoffen erzielt.

Der Strömungskanal 46 wird von der aufsteigenden Strömung des Abwassers durchströmt, die durch den Belüfter 38 erzeugt wird. Das Abwasser streicht somit innerhalb des Strömungskanals 46 an den Innenseiten der Platten 42, 44 entlang und tritt an der Oberseite des Fällmoduls 40 wieder aus, so dass das Fällmaterial effektiv im Volumen der Hauptklärkammer 24 verteilt wird.

Das untere Ende des Strömungskanals 46 an der Unterseite des Fällmoduls 40 bildet seine offene Einlassseite, während sein oberes Ende die nach oben offene Auslassseite darstellt. Ferner ist der Strömungskanal 46 zu seinen lateralen Seiten hin offen. Eine dieser lateralen Seiten ist in Fig. 1 dem Betrachter zugewandt. Insgesamt bildet der Strömungskanal 46 somit einen nach unten und oben sowie zu zwei gegenüberliegenden Seiten offenen Raum, der lediglich durch die Platten 42, 44 begrenzt wird.

Gemäß einer weiteren, hier nicht dargestellten Ausführungsform können zwischen den Platten 42, 44 ferner Führungsmittel zur Umlenkung und/oder Verwirbelung der Strömung innerhalb des Strömungskanals 46 angeordnet sein. Diese sorgen für einen möglichst intensiven Kontakt zwischen der Strömung durch den Strömungskanal 46 und den Platten 42, 44. Dies erhöht die Effizienz des Fällmoduls 40. Die Führungsmittel können etwa Umlenkbleche, Stege oder dergleichen sein, die sich zwischen den Platten 42, 44 erstrecken.

Aufgrund der Anordnung des Fällmoduls 40 in der Strömung des Abwassers, die im vorliegenden Fall durch den darunter angeordneten Belüfter 38 erzeugt wird, werden die Fällprodukte auch ohne zusätzliche Hilfsmittel oder Fördereinrichtungen wie am Fällmodul 40 angeordnete Pumpen oder dergleichen effektiv in der Hauptklärkammer 24 verteilt. Hierzu wird eine Strömung ausgenutzt, der im Betrieb der Kläranlage 10 ohnehin auftritt und beispielsweise durch die in der Hauptklärkammer 24 enthaltenen Einrichtungen zur Abwasserbehandlung, wie etwa einen Belüfter 38 erzeugt wird.

Bei der in Fig. 1 dargestellten Ausführungsform ist auch innerhalb der Vorklärkammer 22 ein Belüfter 48 angeordnet. Dieser sorgt für eine Belüftung des Inhalts der Vorklärkammer 22 und ebenfalls für eine aufsteigende Strömung. Obwohl hier nicht dargestellt, ist es möglich, auch innerhalb der Vorklärkammer 22 ein Fällmodul oberhalb des darin angeordneten Belüfters 48 anzuordnen.

Fig. 2 zeigt die in Anordnung des Fällmoduls 40 aus Fig. 1 über dem Belüfter 38 in der Hauptklärkammer 24 in einer Draufsicht mit Blick auf die nach oben offene Auslassseite des Strömungskanals 46. In der Hauptklärkammer 24 und in der Vorklärkammer 22 ist jeweils noch ein weiterer Belüfter 50 und 52 angeordnet.

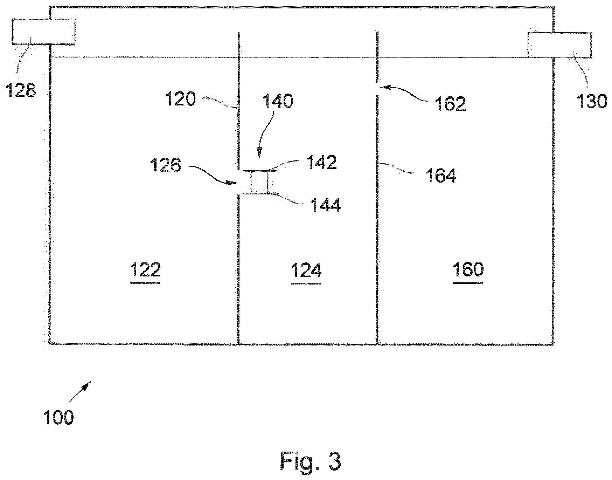

Alternativ zu der in den Fig. 1 und 2 dargestellten Anordnung des Fällmoduls 40 über dem Belüfter 38 kann das Fällmodul auch im Zulauf 26 zur Hauptklärkammer 24 in der Trennwand 20 angeordnet sein, oder wahlweise vor oder hinter dem Zulauf 26. Fig. 3 zeigt schematisch eine Klärvorrichtung 100 mit drei Klärkammern 122, 124 und 126, von denen die linke eine Vorklärkammer 122 darstellt, die über einen Zulauf 128 von außen gespeist wird, die mittlere Klärkammer eine Hauptklärkammer 124 darstellt, die von der Vorklärkammer 122 über einen weiteren Zulauf 126 in einer Trennwand 120 zwischen der Vorklärkammer 122 und der Hauptklärkammer 126 gespeist wird, und die rechte Klärkammer eine Nachklärkammer 160 darstellt, die von der Hauptklärkammer 126 über einen weiteren Zulauf 162 in einer Trennwand 164 zwischen der Hauptklärkammer 126 und der Nachklärkammer 160 gespeist wird. Über einen Ablauf 130 wird Klarwasser aus der Nachklärkammer 160 nach außen abgeführt. Die Begriffe "Vorklärkammer", "Hauptklärkammer" und "Nachklärkammer" sollen lediglich die Abfolge der Einspeisung in die unterschiedlichen Klärkammern 122, 124 und 160 verdeutlichen und in keiner Weise bindend den eigentlichen Klärprozess beschreiben, auf den es an dieser Stelle nicht ankommen soll.

In der Hauptklärkammer 124 ist ein Fällmodul 140 unmittelbar hinter dem Zulauf 126 angeordnet, über welchen vorgeklärtes Abwasser aus der Vorklärkammer 122 in die Hauptklärkammer 124 einströmt. Hierbei tritt eine Strömung in die Hauptklärkammer 124 ein, in welcher das Fällmodul 140 positioniert ist. Die Platten 142, 144 des Fällmoduls sind in diesem Fall vorzugsweise horizontal angeordnet, so dass sich der Strömungskanal 48 horizontal durch das Fällmodul 140 erstreckt und die Strömung somit ungehindert das Fällmodul 140 passieren kann. Eine vergleichbare Anordnung des Fällmoduls 140 ist vor oder hinter der Zulauf 162 in die Nachklärkammer 160 möglich, sowie auch vor dem Ablauf 30 in Fig. 1 und 2 oder dem Ablauf 130 in Fig. 3 (hier nicht dargestellt).

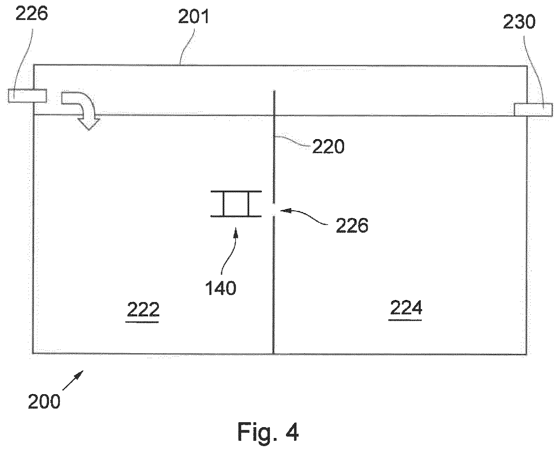

Fig. 4 zeigt eine Klärvorrichtung 200, bei welcher es sich um eine Einbehälter-Anlage handelt, mit einem Klärbehälter 201, in welchem zwei Klärkammern 222,224 angeordnet sind, welche durch eine Trennwand 220 voneinander getrennt sind. In der Trennwand 220 ist eine Durchtrittsöffhung 226 vorgesehen, durch welche Wasser aus der ersten Klärkammer 222 in die zweite Klärkammer 224 strömen kann. Das Fällmodul 40 ist in diesem Fall innerhalb der vorgeschalteten ersten Klärkammer 222 vor der Durchtrittsöffhung 226 angeordnet. Das Fällmodul 140 befindet sich somit innerhalb der Strömung von der ersten Klärkammer 222 in die nachgeschaltete zweite Klärkammer 224. Die erste Klärkammer 222 ist mit einem Zulauf 226 ausgestattet, und die zweite Klärkammer 224 mit einem Ablauf 230.

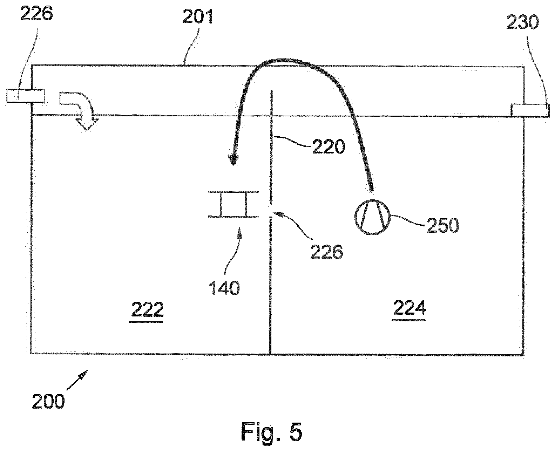

In Fig. 5 ist eine weitere Ausführungsform der Klärvorrichtung 200 dargestellt, in welcher die Anordnung des Klärbehälters 201, welcher durch die Trennwand 220 in zwei Klärkammern 222 und 224 unterteilt ist, identisch mit der vorhergehenden Ausführungsform in Fig. 4 ist. Auch in diesem Fall ist in der Trennwand 220 eine Durchtrittsöffhung 226 angeordnet. Das Fällmodul 140 ist auch hier vor der Durchtrittsöffnung 226 innerhalb der ersten Klärkammer 222 angeordnet. Das Abwasser, das von der ersten Klärkammer 222 in die zweite Klärkammer 224 strömt, passiert somit zumindest teilweise zunächst das Fällmodul 140 und erst anschließend die Durchtrittsöffhung 226.

Zusätzlich ist in der in Fig. 5 gezeigten Ausführungsform eine Fördereinrichtung 250 in Form einer Pumpe vorgesehen, die dazu dient, Wasser aus der nachgeschalteten zweiten Klärkammer 224 zurück in die vorgeschaltete erste Klärkammer 222 zu überführen. Das Abwasservolumen wird somit aus der zweiten Klärkammer 224 zurück in die erste Klärkammer 222 über die Trennwand 220 hinweggepumpt. Im Rahmen der vorliegenden Erfindung ist es möglich, das Fällmodul 140 so anzuordnen, dass eine von der Fördereinrichtung 250 erzeugte Rückströmung das Fällmodul 140 zumindest teilweise passiert. Eine Anordnung der Durchtrittsöffnung 226, wie oben beschrieben, wird hierdurch nicht ausgeschlossen. Bei der Fördereinrichtung 250 kann es sich beispielsweise auch um einen Druckluftheber oder dergleichen handeln.

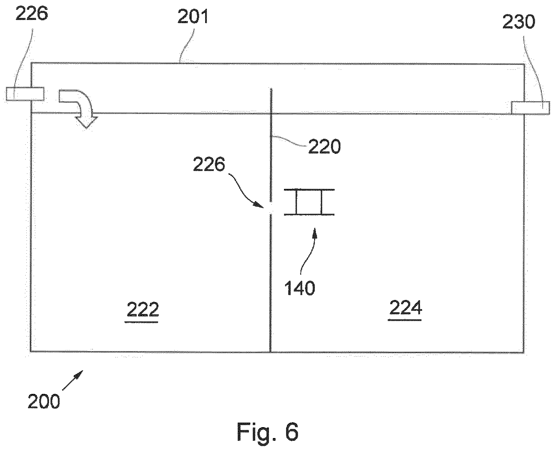

In der Ausführungsform in Fig. 6 ist die Klärvorrichtung 200 mit dem Klärbehälter 201 gezeigt, mit den beiden Klärkammern 222 und 224, die durch die Trennwand 220 mit der Durchtrittsöffhung 226 getrennt sind, wie im Zusammenhang mit den Fig. 4 und 5 beschrieben wird. Allerdings ist in Fig. 6 keine Fördereinrichtung 250 wie in Fig. 5 vorgesehen. Das Fällmodul 140 ist, abweichend von den Fig. 4 und 5, hinter der Durchtrittsöffhung 226 in der nachgeschalteten zweiten Klärkammer 224 angeordnet. Abwasser, das von der ersten Klärkammer 222 in die zweite Klärkammer 224 strömt, passiert somit das Fällmodul 140.

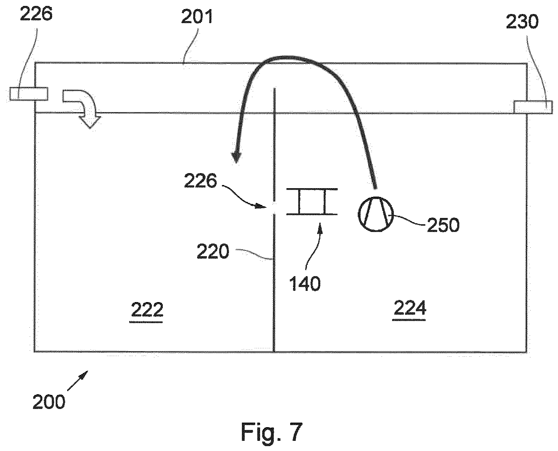

Die Anordnung in Fig. 7 stellt eine Klärvorrichtung 200 dar, mit einem Klärbehälter 201 und zwei durch eine Trennwand 220 verteilte Klärkammer 222 und 224, welche identisch mit der Ausführungsform in Fig. 6 aufgebaut sind. Auch hier ist das Fällmodul 140 hinter der Durchtrittsöffnung 226 angeordnet. Zusätzlich ist bei dieser Ausführungsform jedoch eine Fördereinrichtung 250 wie in Fig. 5 dargestellt, angeordnet, durch welches Abwasser aus der nachgeschalteten zweiten Klärkammer 224 zurück in die erste Klärkammer 222 geführt werden kann. Diese Fördereinrichtung 250 kann als Pumpe, als Druckluftheber oder dergleichen ausgebildet sein.

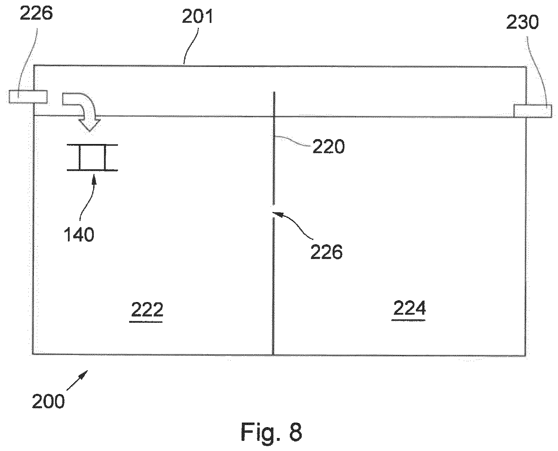

Fig. 8 zeigt die Klärvorrichtung 200, die bezüglich der beiden Klärkammern 222 und 224 sowie der Trennwand 220 und der Durchtrittsöffhung 226 aufgebaut ist wie in den Fig. 4 bis 7 dargestellt. Das Fällmodul 140 ist hier allerdings hinter dem Zulauf 226 angeordnet, so dass es von Abwasser, das durch den Zulauf 226 in die erste Klärkammer 222 einströmt, passiert wird.

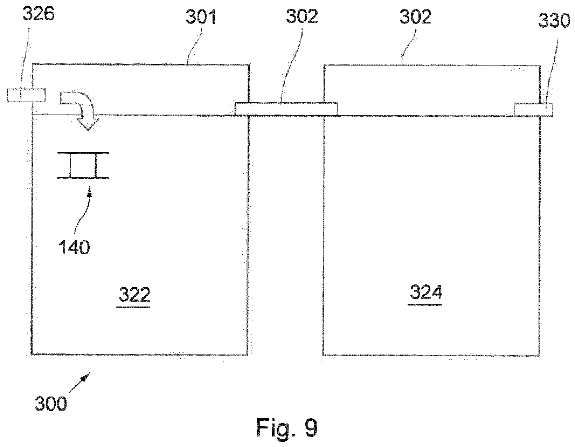

Fig. 9 zeigt eine alternative Ausführungsform der erfindungsgemäßen Klärvorrichtung 300, umfassend zwei Klärbehälter 301,302, die jeweils für sich genommen eine Klärkammer darstellen, jedoch als individuelle Einheiten ausgebildet sind, welche durch eine Fördereinrichtung 303 zur Förderung von Abwasser aus dem vorgeschalteten ersten Klärbehälter 301 in den nachgeschalteten zweiten Klärbehälter 302 verbunden sind. Der erste Klärbehälter 301 ist mit einem Zulauf 326 ausgestattet, über welchen der erste Klärbehälter 301 gefüllt wird. Der zweite Klärbehälter 302 verfügt über einen entsprechenden Ablauf 330. Das Fällmodul 140 ist bei dieser Ausführungsform innerhalb des ersten Klärbehälters 301 angeordnet, und zwar hinter den Zulauf, so dass es von dem in den ersten Klärbehälter 301 zulaufenden Abwasser durchströmt werden kann. Optional kann eine Fördereinrichtung zur Rezirkulation von Abwasser aus dem zweiten Klärbehälter 302 zurück in den ersten Klärbehälter 301 vorgesehen sein, wie im Zusammenhang mit den Fig. 5 und 7 beschrieben wurde.

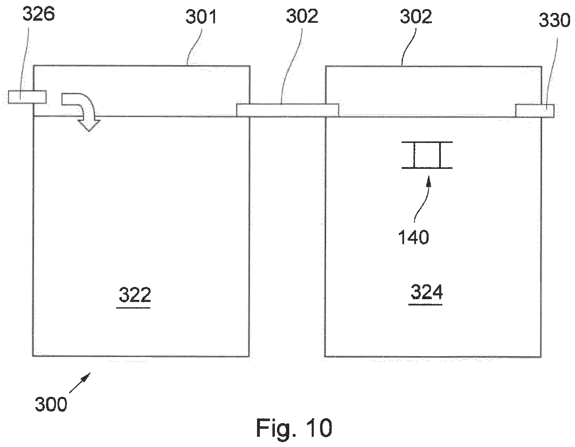

Fig. 10 zeigt die Klärvorrichtung 300 in einer abgewandelten Ausführungsform, in welcher sich das Fällmodul 140 im zweiten nachgeschalteten Klärbehälter 302 befindet.

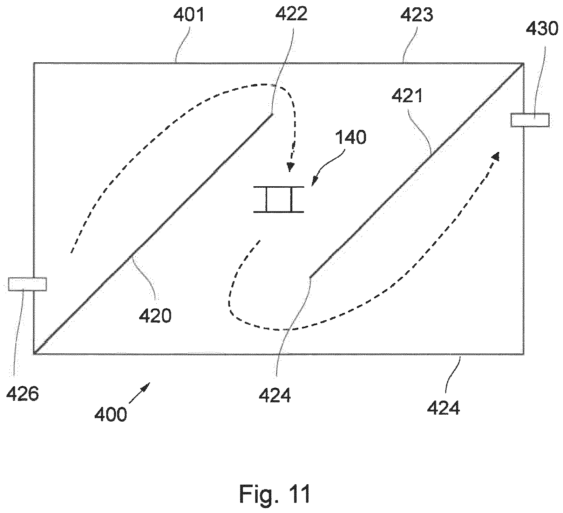

Fig. 11 zeigt eine schematische Draufsicht auf eine Ausführungsform einer Klärvorrichtung 400, mit einem Klärbehälter 401, dessen Volumen durch zwei Unterteilungswände 420,421 in mehrere Teilbereiche unterteilt ist. Der Klärbehälter 401 hat einen rechteckigen Grundriss, und eine erste Unterteilungswand 420 erstreckt sich von einer Ecke (der linken unteren Ecke in Fig. 11) aus diagonal in das Behältervolumen hinein. Zwischen einem freien Ende 422 dieser Unterteilungswand 420 und einer benachbarten Außenwand 423 des Klärbehälters 401 verbleibt ein freier Zwischenraum. In gleicher Weise erstreckt sich die zweite Unterteilungswand 421 von einer gegenüberliegenden Ecke (d. h. der rechten oberen Ecke in Fig. 11) des Klärbehälters 401 diagonal in das Behältervolumen, und zwischen einem freien Ende 424 der zweiten Unterteilungswand 421 und einer Außenwand 425 des Klärbehälters 401, die der Außenwand 423 gegenüberliegt, verbleibt ebenfalls ein freier Zwischenraum.

Im Ergebnis erstrecken sich die Unterteilungswände 420,421 teilweise parallel zueinander und können von Abwasser, das in den Klärbehälter 401 über einen Zulauf 426 einströmt, umströmt werden, und zwar aufeinanderfolgend entlang der ersten Unterteilungswand 420, um deren Ende 422 herum, zwischen der gegenüberliegenden Seite der Unterteilungswand 420 und der zweiten Unterteilungswand 421, um das freie Ende 424 der zweiten Unterteilungswand 421 herum, und in Richtung eines Ablaufs 430 des Klärbehälters 401.

Es ergibt sich also eine im wesentlichen S-förmig mäandrierende Strömung, die durch gestrichelte Pfeile in Fig. 11 dargestellt ist. Innerhalb dieser Strömung, also insbesondere in einem Teilbereich des Volumens des Klärbehälters 401, in welchem die Unterteilungswände 420,421 parallel stehen, ist das Fällmodul 140 angeordnet, so dass es dort frei von der Strömung zwischen den Unterteilungswänden 420,421 durchströmt werden kann.

## Patentansprüche

1. Klärvorrichtung (10, 100, 200, 300, 400), umfassend zumindest eine Klärkammer (24, 124, 222, 224), enthaltend ein Abwasservolumen, das in einer freien Strömung die Klärkammer (24, 124, 222, 224) durchströmt oder durch diese zirkuliert, Einrichtungen zur Förderung oder Behandlung des Abwassers, und ein Fällmodul (40, 140), das in der Klärkammer (24, 124, 222, 224) angeordnet ist, **dadurch gekennzeichnet, dass** das Fällmodul (40, 140) in einer Position angeordnet ist, in der es von der Strömung durchströmt wird.

2. Klärvorrichtung gemäß Anspruch 1, **dadurch gekennzeichnet, dass** die Strömung durch die Einrichtungen zur Förderung oder Behandlung des Abwassers erzeugt wird.

3. Klärvorrichtung gemäß Anspruch 1 oder 2, **dadurch gekennzeichnet, dass** das Fällmodul (40, 140) zwei im Wesentlichen parallele Platten (42, 44; 142, 144) umfasst, die im Abstand voneinander angeordnet sind und zwischen sich einen Strömungskanal (46) begrenzen, der zumindest zu einer Einlassseite und einer gegenüberliegenden Auslassseite hin offen ist.

4. Klärvorrichtung gemäß Anspruch 3, **dadurch gekennzeichnet, dass** der Strömungskanal (46) ferner zu gegenüberliegenden lateralen Seiten hin offen ist.

5. Klärvorrichtung gemäß Anspruch 3 oder 4, **dadurch gekennzeichnet, dass** die Platten (142, 144) senkrecht in der Klärkammer (24) stehen.

6. Klärvorrichtung gemäß Anspruch 3 oder 4, **dadurch gekennzeichnet, dass** die Platten (42, 44) horizontal in der Klärkammer (124, 222, 224) stehen.

7. Klärvorrichtung gemäß einem der Ansprüche 3 bis 5, **dadurch gekennzeichnet, dass** zwischen den Platten (42, 44; 142, 144) Führungsmittel zur Umlenkung und/oder Verwirbelung der Strömung innerhalb des Strömungskanals (46) angeordnet sind.

8. Klärvorrichtung gemäß einem der vorhergehenden Ansprüche, **dadurch gekennzeichnet, dass** die Einrichtungen zumindest einen Belüfter (38) umfassen, der im Bodenbereich der Klärkammer (24) angeordnet ist, und dass das Fällmodul (40) auf einer Höhe oberhalb des Belüfters (38) angeordnet ist.

9. Klärvorrichtung gemäß Anspruch 8, **dadurch gekennzeichnet, dass** das Fällmodul (40) unmittelbar über dem Belüfter (38) angeordnet ist.

10. Klärvorrichtung gemäß einem der vorhergehenden Ansprüche, **dadurch gekennzeichnet, dass** die Klärkammer (24, 124, 222, 224) eine Hauptklärkammer ist, die aus einer vorgeschalteten Vorklärkammer (22, 122) mit vorgereinigtem Abwasser gespeist wird.

11. Klärvorrichtung gemäß Anspruch 10, **dadurch gekennzeichnet, dass** in der Vorklärkammer (22) ein weiterer Belüfter (48) angeordnet ist.

12. Klärvorrichtung gemäß einem der vorhergehenden Ansprüche, **dadurch gekennzeichnet, dass** die Einrichtungen einen Zulauf (26, 126, 226, 326, 426) in einer Wand (20, 120) der Klärkammer umfassen, und dass das Fällmodul (140) im Zulauf (26, 126, 226, 326, 426) oder vor oder hinter dem Zulauf (26, 126, 226, 326, 426) angeordnet ist.

13. Klärvorrichtung gemäß einem der vorhergehenden Ansprüche, **dadurch gekennzeichnet, dass** die Einrichtungen einen Ablauf (30, 130) in einer Wand der Klärkammer umfassen, und dass das Fällmodul im Ablauf oder vor oder hinter dem Ablauf angeordnet ist.

14. Klärvorrichtung gemäß einem der vorhergehenden Ansprüche, **dadurch gekennzeichnet, dass** die Klärvorrichtung (200) zumindest einen Klärbehälter (201) umfasst, der durch zumindest eine Trennwand (220) in Klärkammern (222, 224) unterteilt ist, und dass das Fällmodul (140) in einer dieser Klärkammern (222, 224) angeordnet ist.

15. Klärvorrichtung gemäß Anspruch 14, **dadurch gekennzeichnet, dass** die Trennwand (220) zumindest eine Durchtrittsöffhung (226) umfasst, und dass das Fällmodul (140) vor oder hinter der Durchtrittsöffhung (226) angeordnet ist.

16. Klärvorrichtung gemäß Anspruch 14 oder 15, **dadurch gekennzeichnet, dass** die Klärkammern (222, 224) einen vorgeschaltete (222) und eine nachgeschaltete Klärkammer (224) umfassen, von denen die nachgeschaltete Klärkammer (224) aus der vorgeschalteten Klärkammer (222) gespeist wird, und dass die Einrichtungen eine Fördereinrichtung (250) zur Rückführung von Abwasser aus der nachgeschalteten Klärkammer (224) in die vorgeschaltete Klärkammer (222) umfassen.

17. Klärvorrichtung gemäß Anspruch 16, **dadurch gekennzeichnet, dass** die Fördereinrichtung (250) eine Strömung erzeugt, in welcher das Fällmodul (140) angeordnet ist.

18. Klärvorrichtung gemäß einem der vorhergehenden Ansprüche, **dadurch gekennzeichnet, dass** die Klärvorrichtung (300) mehrere Klärbehälter (301, 302) umfasst, die untereinander durch zumindest eine Fördereinrichtung (303) zur Förderung von Abwasser aus einem Klärbehälter (301) in einen nachgeschalteten Klärbehälter (302) verbunden sind, und dass das Fällmodul (140) in einem dieser Klärbehälter (301, 302) angeordnet ist.

19. Klärvorrichtung gemäß einem der vorhergehenden Ansprüche, **dadurch gekennzeichnet, dass** die Klärvorrichtung (400) zumindest einen Klärbehälter (401) umfasst, der durch zumindest eine Unterteilungswand (420, 421) in mehrere Teilbereiche unterteilt ist, welche Unterteilungswand (420, 421) derart angeordnet sind, dass sie vom Abwasser seitlich umströmt werden kann, wobei das Fällmodul (140) in einem der Teilbereiche angeordnet ist.

20. Klärvorrichtung gemäß Anspruch 19, **dadurch gekennzeichnet, dass** der Klärbehälter (401) zumindest zwei Unterteilungswände (420, 421) umfasst, die derart angeordnet sind, dass das Abwasser zwischen ihnen hindurchströmen kann, und dass das Fällmodul (140) zwischen diesen Unterteilungswänden (420, 421) angeordnet ist.
